# EUROPÄISCHE PATENTANMELDUNG

(11) **EP 2 058 956 A2**
(43) Veröffentlichungstag der Anmeldung: **13.05.2009**
(21) Anmeldenummer: 08019212.3
(22) Anmeldetag: 03.11.2008
(51) Int. Cl.: H04B 7/185

(54) **Verfahren zur aeronautischen Funkkommunikation**

(30) Priorität: 06.11.2007 DE 102007053235
(71) Anmelder: Deutsches Zentrum für Luft- und Raumfahrt e.V., 51147 Köln (DE)
(72) Erfinder: Kissling, Christian, 81549 München (DE); Parraga-Niebla, Christina, 82131 Gauting (DE)
(74) Vertreter: von Kreisler Selting Werner

(57) **Zusammenfassung**

Zur aeronautischen Funkkommunikation zwischen in Flugzeugen vorgesehenen Kommunikationseinrichtungen und terrestrischen Kommunikationseinrichtungen, insbesondere Flug-Controllern, im Wege über einen mit seinem Spotbeam (SB) ein bestimmtes geographisches Gebiet abdeckenden Kommunikationssatelliten (SA) wird der Spotbeam in mehrere Gruppen, in welche Flugzeuge (FL) nach Interessengemeinschaft eingruppiert werden, oder in mehrere geographisch verteilte Sektoren (A, B, C, ..., Z) unterteilt. Die Unterteilung des Spotbeams in Sektoren/Gruppen erfolgt auf logischer Basis mittels einer jeweils einem Sektor bzw. einer Gruppe zugeordneten Identifikationsziffer (ID 1, ID 2, ID 3, ..., ID X). Das Frequenzspektrum eines Spotbeams kann frequenzmultiplexartig in verschiedene Frequenzbänder aufgeteilt werden, wobei jedes Frequenzband einem Sektor bzw. einer Gruppe entspricht und die den einzelnen Sektoren/Gruppen zugeteilten Bandbreiten für jeden Sektor bzw. jede Gruppe dimensioniert werden. Alle Sektoren/Gruppen verwenden die gemeinsamen Spotbeam-Ressourcen. Die Höhe der von den einzelnen Sektoren/Gruppen genutzten Kapazität richtet sich nach dem tatsächlichen Flugverkehrsaufkommen.

Anwendung bei aeronautischer Kommunikation, ATC (Aeronautical Traffic Control) und AOC (Aeronautical Operational Control).

## Beschreibung

Die Erfindung betrifft ein Verfahren zur aeronautischen Funkkommunikation zwischen in Flugzeugen vorgesehenen Kommunikationseinrichtungen und terrestrischen Kommunikationseinrichtungen im Wege über einen Kommunikationssatelliten, der mit seinem zur Erde gerichteten Spotbeam ein bestimmtes geographisches Gebiet abdeckt.

Die Erfindung bezieht sich insbesondere auf Probleme, die bei der Funkkommunikation zwischen Piloten von Flugzeugen und den Flugcontrollern am Boden entstehen, und überwindet diese Probleme.

Die aeronautische Kommunikation umfasst die Sprach- und Datenkommunikation zwischen Piloten und den sogenannten "Controllern", welche ein geographisch abgegrenztes Gebiet zu überwachen haben. Diese Gebiete werden gewöhnlich als "Sektoren" bezeichnet.

Die heutige aeronautische Kommunikation erfolgt hauptsächlich mittels VHF-Funkkommunikation mit bodengebundenen Basisstationen. Bei der Sektorbildung in bodengestützten VHF-Kommunikationssystemen wird dabei jedem Sektor ein bestimmtes Frequenzband aus dem gesamten gegebenen Frequenzpool zugewiesen. VHF-Frequenzen, die einem Sektor zugewiesen werden, können in einem weit genug entfernten Sektor wiederverwendet werden (Frequency-reuse). Bei einem Wechsel von einem Sektor in einen anderen fordert der Flugzeugpilot von seinem momentanen Controller, der den Sektor A überwacht, die Frequenz des neuen Sektors an, meldet sich beim momentanen Controller ab und bei dem Controller des neuen Sektors B auf der neuen Frequenz an. Gemäß dem heutigen Stand der Technik werden somit zur aeronautischen Kommunikation terrestrisch installierte VHF-Transceiver verwendet, welche Sektorenbildung durch Frequenzmultiplex (FDMA) durchführen, wobei die Verbindungen dabei halbduplex betrieben sind.

Für die Verwendung von Satellitenkommunikation zwischen Flugzeugen und terrestrischen Kontrollstationen existieren heutzutage keine Sektorkonzepte, d.h. Piloten können mit Controllern über Funk im Wege über einen Kommunikationssatelliten kommunizieren, aber auf nicht durch Sektoren koordinierte Art und Weise.

Aus EP 1 798 872 A2 ist lediglich ein über verschiedenartige Kommunikationsnetze arbeitendes Verfahren zur Funkkommunikation zwischen in Flugzeugen vorgesehenen Kommunikationseinrichtungen und terrestrischen Kommunikationseinrichtungen im Wege über mehrere Kommunikationssatelliten bekannt, die mit ihren den verschiedenartigen Kommunikationsnetzen zugeteilten Spotbeams bestimmte Gebiete abdecken.

US 6 711 398 B1 und in ähnlicher Weise auch US 7 194 270 B2 behandeln ein einfaches zellulares Kommunikationssatelliten-Spotbeam-Pattern, das allerdings nicht zur Kommunikation zwischen Flugzeugen und terrestrischen Kontrollstationen vorgesehen ist und bei welchem ein gesamter verfügbarer Frequenzbereich in einzelne Frequenzspektren unterteilt wird, die jeweils einer Ausleuchtzone eines Spotbeams einer Antenne des Kommunikationssatelliten zugeordnet werden. Die Nutzer, die sich mit ihrem Kommunikationsendgerät im Abdeckungsbereich einer einer Ausleuchtzone entsprechenden Zelle befinden, müssen dann die dieser Zelle zugewiesene Frequenz verwenden, um mit dem Kommunikationssatelliten kommunizieren zu können.

Aufgabe der vorliegenden Erfindung ist es, ein speziell für die Kommunikation zwischen Piloten von Flugzeugen und terrestrischen Controllern anwendbares aeronautisches Funkkommunikationsverfahren zu schaffen, das einen zweckmäßigen und flexibel wirksamen Einsatz von Kommunikationssatelliten in der Funkstrecke ermöglicht.

Gemäß der vorliegenden Erfindung, die sich auf ein Verfahren der eingangs genannten Art bezieht, wird diese Aufgabe in vorteilhafter Weise dadurch gelöst, dass der zur Erde gerichtete Spotbeam des Kommunikationssatelliten in mehrere geographisch verteilte, an geographische Grenzen gebundene und einzeln überwachbare Sektoren oder in mehrere Gruppen unterteilt wird, in welche Flugzeuge entsprechend Interessengemeinschaften eingruppiert werden, wobei eine Interessengemeinschaft dadurch definiert ist, dass übertragene Informationen für alle Teilnehmer einer Gruppe relevant sind, dass die Unterteilung des Spotbeams in Sektoren bzw. Gruppen auf logischer Basis mittels einer jeweils einem Sektor bzw. einer Gruppe zugeordneten Identifikationsziffer durchgeführt wird und dass alle Sektoren bzw. alle Gruppen die gemeinsamen Spotbeam-Ressourcen verwenden und sich die Höhe der von den einzelnen Sektoren bzw. Gruppen genutzten Kapazität nach dem tatsächlichen Flugverkehrsaufkommen in einem Sektor oder einer eine Interessengemeinschaft bildenden Gruppe richtet.

Für den zukünftigen Einsatz von Satelliten für die aeronautische Cockpitkommunikation sieht die Situation folgendermaßen aus:

Das Gebiet, das von einem Satelliten-Spotbeam z.B. eines geostationären Kommunikationssatelliten abgedeckt wird, ist je nach Region deutlich größer als diejenige Fläche, die einem heutigen Sektor eines aeronautischen VHF-Kommunikationssystem mit bodengebundenen Basisstationen entspricht. Da ein Controller immer nur eine bestimmte Anzahl von Flugzeugen gleichzeitig verwalten kann und diese Anzahl in einem Satelliten-Spotbeam unter Umständen zu groß werden kann, ist es erforderlich, auch hier eine Unterteilung in Gruppen bzw. Sektoren vorzunehmen.

Eine Bildung von Sektoren stellt bei Einsatz von Kommunikationssatelliten in aeronautischen Kommunikationsverfahren diejenige Gestaltung dar, die am nächsten zu den bestehenden VHF-Kommunikationssystemen mit bodengebundenen Basisstationen ist. In der Zukunft kann es jedoch durchaus sein, dass Flugzeuge einfach nach Notwendigkeit gruppiert werden, anstatt dass das Gebiet anhand geographischer Sektoren unterteilt wird.

Für die Erklärung der prinzipiellen Verfahrensweise und für die besonderen Ausgestaltungen und Weiterbildungen des Verfahrens nach der vorliegenden Erfindung ist die Unterscheidung zwischen Gruppe und Sektor im Weiteren nicht von Bedeutung. Jedoch stellen Gruppe und Sektor zwei verschiedene Anwendungsmöglichkeiten dar, bei denen das angegebene Verfahren nach der vorliegenden Erfindung zur Anwendung kommen kann.

Die Unterteilung in Gruppen muss nicht an geographische Gebiete gebunden sein, wie dies bei heutigen VHF-Sektoren der Fall ist. Eine Unterteilung in Gruppen oder wie bisher in Sektoren ist deswegen erforderlich, weil eine Kommunikation zwischen dem Piloten eines Flugzeugs und dem Controller für andere Flugzeuge, welche sich in der Nähe befinden, relevant ist, um das Geschehen in der unmittelbaren Umgebung des eigenen Flugzeugs besser einschätzen zu können (Situational Awareness).

Das Frequenzspektrum eines Satelliten-Spotbeams lässt sich entsprechend einer Frequenzmultiplex-Methode in verschiedene Frequenzbänder aufteilen, wobei jedes Frequenzband einer Gruppe bzw. einem Sektor entspricht.

Der Einsatz von Frequenzmultiplex, entsprechend der existierenden terrestrischen VHF-Struktur, verursacht allerdings eine nur suboptimale Nutzung der teuren Satellitenressourcen. Dies gilt im Besonderen deswegen, weil die Höhe des Flugverkehrsaufkommens von der Tageszeit stark abhängig ist und somit die Verkehrslast stark schwankt. In statisch dimensionierten Satelliten-Spotbeams kann man daher erwarten, dass über einen längeren Zeitraum hinweg Ressourcen bereitgestellt, aber nicht permanent genutzt werden.

Der Einsatz von Frequenzmultiplex mit statischer Dimensionierung kann zu Engpässen bei unerwartet höherem Verkehrsaufkommen führen, wodurch eine Blockierung von Verbindungswünschen entstehen kann. Dies ist für den Einsatz in ATC/ATS-Cockpit-Kommunikation nicht zulässig.

Der Einsatz von Frequenzmultiplex erfordert den Einsatz zusätzlicher Hardware, um mehreren Sektoren gleichzeitig angehören zu können, beispielsweise für Übergangsphasen von einem Sektor zu einem anderen.

Die den einzelnen Sektoren bzw. Gruppen zugeteilten Bandbreiten können in vorteilhafter Weise in geeigneter Weise für jeden Sektor bzw. jede Gruppe entsprechend dem tatsächlichen Verkehrsaufkommen in dem jeweiligen Sektor bzw. in der jeweiligen Gruppe dimensioniert werden, wobei Sektoren bzw. Gruppen mit hohem Flugverkehrsaufkommen Träger mit großer Bandbreite und Sektoren bzw. Gruppen mit niedrigerem Flugverkehrsaufkommen Träger mit geringer Bandbreite zugewiesen werden.

Durch das Verfahren nach der vorliegenden Erfindung ergibt sich eine effiziente und damit auch kostenoptimierte Verwendung der Satellitenressourcen, immer angepasst an die jeweils bestehenden Anforderungen. Kapazitätsengpässe werden vermieden. Es ist eine Zugehörigkeit der Flugzeuge zu mehreren Gruppen gleichzeitig möglich, ohne dass zusätzliche Hardware aufgebracht werden muss.

Die Identifikationsziffer kann auf der IP-Multicast-Ebene des ISO/OSI-Protokollstacks eingeführt werden, wobei die logische IP-Multicasting-Adresse der Identifikationsziffer und somit dem zugeordneten Sektor bzw. der zugeordneten Gruppe entspricht. Die Identifikationsziffer kann aber auch auf der Ebene der Link-Layer-Kennfelder des ISO/OSI-Protokollstacks eingeführt werden, wobei ein Feld im Linklayer-Frame der Identifikationsziffer und somit dem zugeordneten Sektor bzw. der zugeordneten Gruppe entspricht. Für MPEG-2-Transport-Stream (TS) ist das PID(Packet IDentifier)-Feld das Link-Layer-Kennfeld. Die Identifikationsziffer lässt sich genauso gut auf der Ebene der Kennfelder im Physical Layer des ISO/OSI-Protokollstacks einführen, wobei ein Feld im Physical-Layer-Frame der Identifikationsziffer und somit dem zugeordneten Sektor bzw. der zugeordneten Gruppe entspricht. Für DVB-S2 ist das ISI(Input Stream Identifier)-Feld das Link-Layer-Kennfeld.

Durch die logischen Identifikationsziffern können an geographische Grenzen gebundene Sektoren bezeichnet werden. Es können durch die logischen Identifikationsziffern aber auch nicht geographisch gebundene, sondern im Sinne von Interessengemeinschaften zu verstehende Gruppen bezeichnet werden.

Die in Flugzeugen vorgesehenen Kommunikationseinrichtungen filtern zweckmäßig auf die aktuelle Identifikationsziffer und geben dann die unter dieser Identifikationsziffer anfallenden Daten im Cockpit akustisch oder visuell wieder.

Einem Flugzeug können zwei oder mehr Identifikationsziffern zugewiesen werden, so dass dieses Flugzeug mehreren Sektoren bzw. Gruppen angehört. Während der Übergangsphase eines Flugzeugs von einem Sektor bzw. einer Gruppe in einen anderen Sektor bzw. in eine andere Gruppe können die Informationen aus beiden Sektoren bzw. Gruppen von der betreffenden Flugzeug-Kommunikationseinrichtung erhalten werden, indem dem Flugzeug die Identifikationsziffern der beiden betreffenden Sektoren bzw. Gruppen zugewiesen und dort zur Anzeige gebracht werden.

Alle sich in einem Satelliten-Spotbeam bewegenden Flugzeuge können mit ihren Kommunikationseinrichtungen in vorteilhafter Weise die gesamte Kommunikation in diesem Spotbeam empfangen und anhand der Identifikationsziffern nur diejenige Information decodieren, die sie benötigen.

In den beigefügten Ansprüchen 2 bis 12, die sich mittelbar oder unmittelbar auf den Anspruch 1 rückbeziehen, sind vorteilhafte und zweckmäßige Weiterbildungen der Erfindung angegeben.

Eine vorteilhafte Verwendungsmöglichkeit des erfindungsgemäß ausgelegten Verfahrens besteht bei der Kommunikation zwischen Piloten von Flugzeugen und Flug-Controllern am Boden.

Die Erfindung wird nachfolgend unter Bezugnahme auf die anliegenden Zeichnungen im Einzelnen erläutert. Es zeigen:
- Fig.1: in einer schematischen Darstellung die beispielhafte Bildung von Sektoren in einem Satelliten-Spotbeam durch Frequenzmultiplex,
- Fig.2: die den Sektoren des Beispiels von Fig.1 zugeordneten Trägerbandbreiten,
- Fig.3: in einer schematischen Darstellung eine beispielhafte Bildung von Gruppen/Sektoren unter Verwendung logischer Identifikationsziffern im Satelliten-Spotbeam,
- Fig.4: die dem Spotbeam des Anwendungsbeispiels von Fig.3 zugeordnete Frequenzbandbreite für DVB-S2,
- Fig.5: in einer schematischen Darstellung ein Anwendungsbeispiel zur Durchführung des Verfahrens nach der Erfindung unter Verwendung logischer Identifikationsziffern zur Sektorbildung im Satelliten-Spotbeam,
- Fig.6: die dem Spotbeam des Anwendungsbeispiels von Fig.5 zugeordnete Frequenzbandbreite für DVB-S2, und
- Fig.7: in einer schematischen Darstellung ein Beispiel einer dynamischen Gruppenbildung von Flugzeugen mittels verschiedener Identifikationsziffern, speziell verschiedener PIDs (Packet IDentifiers) für DVB-S2.

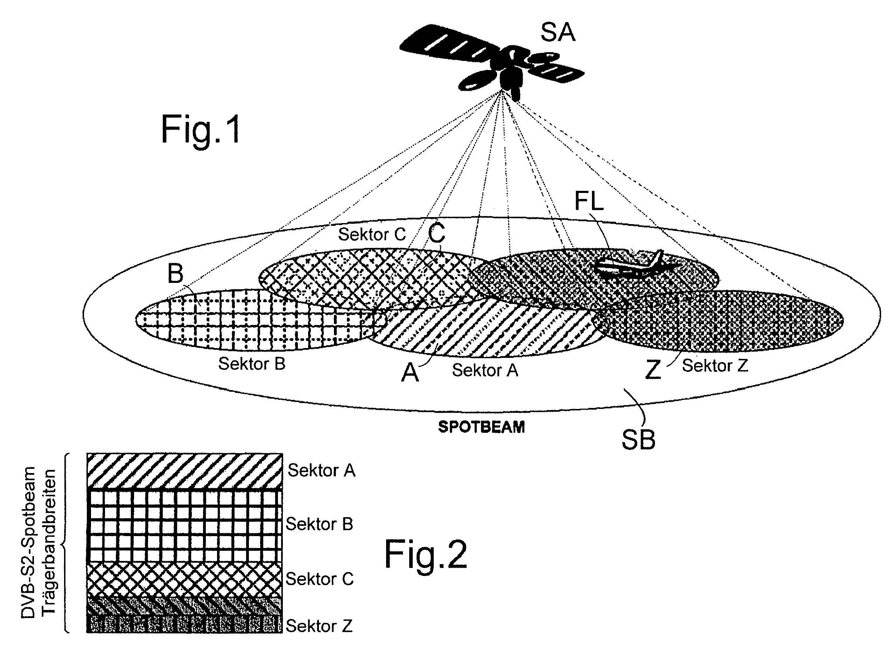

Für den angegebenen Einsatz von Satelliten in aeronautischen Funk-Kommunikationssystemen für Flugzeuge FL ist es, wie Fig.1 graphisch in einer schematischen Ansicht zeigt, prinzipiell möglich, ähnlich wie beim heutigen terrestrischen VHF-System, das Frequenzspektrum eines Spotbeams SB eines Satelliten SA in verschiedene Frequenzbänder aufzuteilen, wobei jedes Frequenzband einer Gruppe bzw. einem Sektor entspricht. Dargestellt sind in Fig.1 fünf innerhalb des Spotbeams SB verteilte Sektoren, nämlich der Sektor A, der Sektor B, der Sektor C, ein aus Kontinuitätsgründen unbezeichneter Sektor und der Sektor Z.

Wird dieses Verfahren entsprechend Fig.1 angewandt, so ist es erforderlich, die zugeordneten Bandbreiten für jede Gruppe bzw. für jeden Sektor zu dimensionieren. Wie in Fig.2 exemplarisch anhand einer Bandbreitenverteilung gezeigt ist, kann z.B. für einen Sektor mit hohem Verkehrsaufkommen (Sektor B) ein Träger mit großer Bandbreite zugewiesen werden, während ein Sektor, für den nur ein geringes Verkehrsaufkommen veranschlagt wird, einen Träger mit geringer Bandbreite erhält (Sektor Z).

Die Anwendung dieses Verfahrens hat jedoch in manchen Fällen einige Schwachpunkte:
- Die Bandbreitenzuweisung ist statisch pro Spotbeam. Ist das Verkehrsaufkommen in einem Sektor unerwartet höher, so kann es zu Kapazitätsengpässen kommen, welche in einer Blockierung von Verbindungswünschen endet. Dies ist bei Cockpit-Kommunikation nicht zulässig. Eine aufwändige Neuorganisierung der gesamten Satellitenkapazität wäre in diesem Fall nötig.
- Ist das Verkehrsaufkommen in einem Sektor geringer als vorhergesehen, so geht Übertragungskapazität verloren, da die zugewiesene Bandbreite nicht voll ausgenutzt wird. In diesem Fall arbeitet das System nicht optimal.
- Ein Flugzeug kann hier immer nur einer Gruppe angehören, nämlich derjenigen Gruppe, auf deren Frequenz die Hardware gerade eingestellt ist. Soll ein Flugzeug dagegen zwei Gruppen gleichzeitig angehören, z.B. in der Übergangsphase zwischen altem und neuem Sektor bzw. alter und neuer Gruppe, so ist zusätzliche Hardware nötig, d.h. z.B. ein zweites Modem.

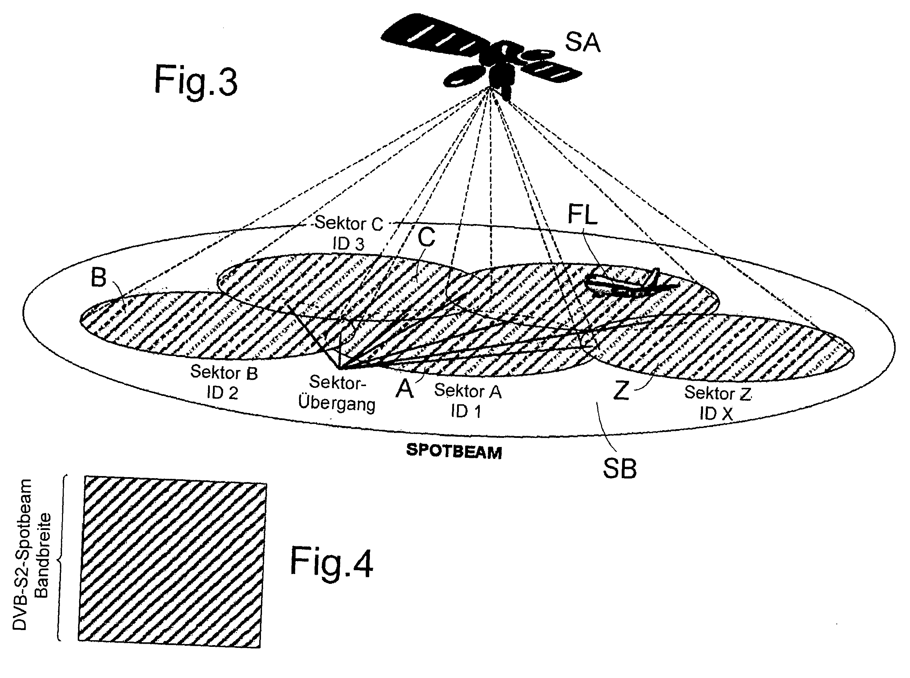

Gemäß einer vorteilhaften, nachfolgend im Einzelnen anhand von Fig.3 bis Fig.7 erläuterten Ausführung des Verfahrens nach der vorliegenden Erfindung werden die vorstehend erwähnten Schwachpunkte der Gruppen- bzw. Sektorenbildung auf eine alternative Weise ausgeräumt, wobei sich zugleich eine effiziente und damit auch kostenoptimierte Verwendung der Satellitenressourcen, stets angepasst an die Anforderungen, ergibt, Kapazitätsengpässe vermieden werden und eine Zugehörigkeit zu mehreren Gruppen bzw. Sektoren gleichzeitig ermöglicht wird, ohne dass zusätzliche Hardware-Komponenten benötigt werden.

Anstatt das Frequenzband eines Satelliten-Spotbeams in Frequenzgruppen zu unterteilen, die jeweils einem Sektor oder einer Gruppe zugeordnet werden, wird die Sektor- bzw. Gruppenbildung auf logischer Basis mittels einer Identifikationsziffer ID durchgeführt.

Die Identifikationsziffer ID kann auf verschiedenen Ebenen eingeführt werden:
a) IP-Multicast: Hier entspricht die logische IP-Multicasting-Adresse der Identifikationsziffer ID und somit der Gruppe bzw. dem Sektor.
b) Kennfeld im Link-Layer: Hier entspricht ein Feld im Link-Layer-Frame der Identifikationsziffer ID. Ein Beispiel für ein entsprechendes Feld ist für MPEG-2-Transport-Stream (TS) das PID-Feld (Packet IDentifier). Dieses Feld erlaubt z.B. die Erzeugung von 8192 verschiedenen Gruppen/Sektoren. Prinzipiell sind auch andere Felder dafür geeignet, im Besonderen bei Verwendung von anderen Protokollen.
c) Kennfelder im Physical-Layer: Hier entspricht ein Feld im Physical-Layer-Frame der Identifikationsziffer ID. Ein Beispiel für ein entsprechendes Feld ist für DVB-S2 das ISI-Feld (Input Stream Identifier), welches die Erzeugung von 255 Gruppen/Sektoren erlaubt.

Fig.3 stellt dieses gemäß der Erfindung verbesserte Verfahren unter Einsatz von DVB-S2 exemplarisch dar. Wie hier zu sehen ist, verwenden im Spotbeam SB des Satelliten SA alle Sektoren bzw. Gruppen die gemeinsamen Spotbeam-Ressourcen Die Höhe der genutzten Kapazität richtet sich nach dem tatsächlichen Verkehrsaufkommen von Flugzeugen FL. Fig.4 zeigt dazu die Frequenzbandbreite des Satelliten-Spotbeams SB für DVB-S2.

Die Vorteile dieses verbesserten Verfahrens nach der vorliegenden Erfindung sind folgende:

Die Kapazität muss für die Sektoren des Satelliten-Spotbeams SB nicht mehr vordimensioniert werden. Im hier dargestellten Beispiel erfolgt die Bildung des Sektors A durch die Identifikationsziffer ID 1, die Bildung des Sektors B durch die Identifikationsziffer ID 2, die Bildung des Sektors C durch die Identifikationsziffer ID 3 und die Bildung des Sektors Z durch die Identifikationsziffer ID X. Der unbezeichnete Sektor ist in Fig.3 aus Gründen der ID-Kontinuität mit keiner Identifikationsziffer versehen.

Im Gegensatz zur Frequenzmultiplex-Methode wird bei dem durch die Einführung von Identifikationsziffern verbesserten Verfahren immer nur diejenige Kapazität verwendet, die benötigt wird. Ist das Flugverkehrsaufkommen höher als erwartet, so wird ein größerer Teil der Frequenzbandbreite des Spotbeams SB verwendet. Solange die benötigte Bandbreite kleiner als die Kapazität des Spotbeams SB ist, werden somit Kapazitätsengpässe vermieden. Ist das Flugaufkommen geringer als erwartet, so wird nur derjenige Teil der Spotbeam-Kapazität verwendet, der benötigt wird, ohne dass Ressourcen ungenutzt verloren gehen.

Während der Übergangsphase von einer Gruppe bzw. einem Sektor in eine andere Gruppe bzw. einen anderen Sektor besteht die einfache Möglichkeit, die Informationen aus beiden Gruppen bzw. Sektoren zu erhalten, ohne dass dazu zusätzliche Hardware nötig wird. Dies kann einfach dadurch erreicht werden, dass z.B. die Pilotenkonsole im Flugzeug FL die Daten von zwei verschiedenen logischen Identifikationsziffern ID anzeigt. Dies bedeutet, dass außer einem erhöhten Wissen um die Situation um das Flugzeug FL herum auch geringere Kosten entstehen, da zusätzliche Hardware nicht benötigt wird.

Die Verwendung von logischen Sektorgruppen lässt auch Möglichkeiten für zukünftige Sektor- und Gruppenkonzepte offen.

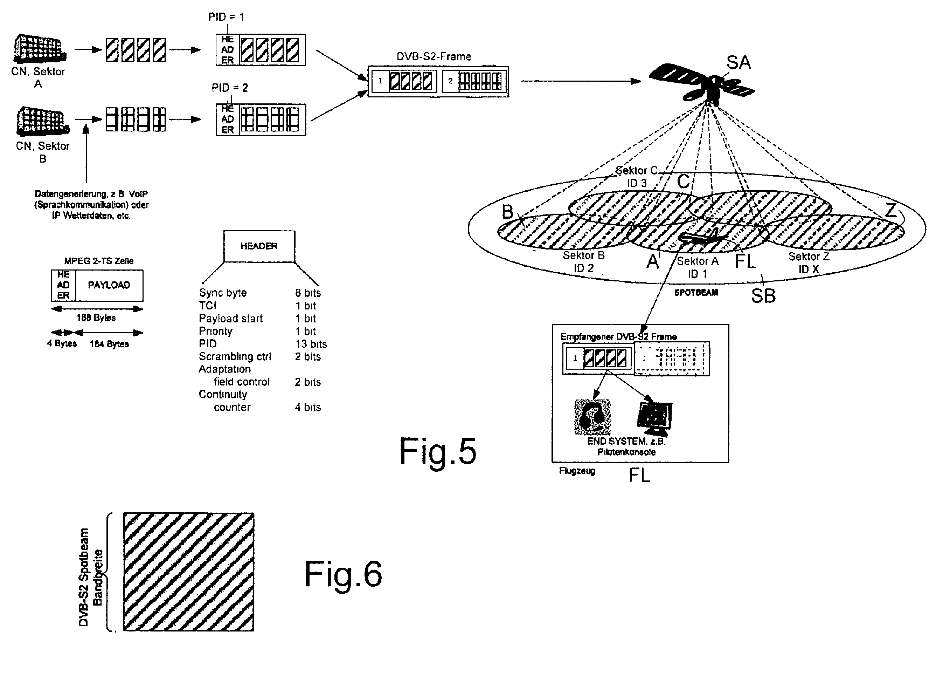

Folgendes anhand von Fig.5 und Fig.6 erläutertes Beispiel für DVB-S2-Frames legt die Funktionsweise des vorher beschriebenen, verbesserten Verfahrens mit Identifikationsziffern beispielhaft dar.

Gemäß Fig.5 befindet sich ein Flugzeug FL im Sektor A innerhalb des Spotbeams SB des Satelliten SA. Die logische Identifikationsziffer, welche diesem Sektor A zugewiesen ist, sei ID 1.

Ohne Einschränkung der Allgemeingültigkeit verwendet das im Beispiel von Fig.5 genannte Netzwerk das Internet-Protocol IP als Netzwerkschicht-Protokoll. Die IP-Datagramme, welche im Controller-Node CN am Boden von einem Flug-Controller, der für den Sektor A verantwortlich ist, für den Sektor A generiert werden, werden, wie in Fig.5 gezeigt ist, im MPEG2-TS(Transport-Stream)-Link-Layer enkapsuliert. MPEG2-TS ist hier nur ein Beispiel. Es können grundsätzlich auch andere Link-Schicht-Protokolle verwendet werden. Es ist lediglich erforderlich, dass ein Datenfeld vorhanden ist, welches die logische Identifikationsziffer des jeweiligen Sektors beinhaltet.

Bei der Enkapsulierung wird das PID(Packet IDentifier)-Feld im MPEG2-TS-Header (siehe Fig.5) auf den Wert des Sektors bzw. der Gruppe gesetzt. Anschließend werden alle MPEG2-TS-Frames auf der physikalischen Schicht enkapsuliert. Das Beispiel von Fig.5 zeigt diese Enkapsulierung für DVB-S2-Basisband-Frames. Andere Enkapsulierungen auf der physikalischen Schicht sind ohne Einschränkung der Allgemeingültigkeit grundsätzlich ebenfalls möglich. Die DVB-S2-Basisband-Frames werden über den Satelliten-Link übertragen und im gesamten Spotbeam SB nach Art von Broadcasting übertragen. Jedem Flugzeug FL wird eine Sektor- oder Gruppen-Identifikationsziffer ID zugewiesen. Das Flugzeug FL in Fig.5 befindet sich in Sektor/Gruppe A und erhält aus diesem Grund die Sektor/Gruppen-Identifikationsziffer ID 1. Aus den empfangenen DVB-S2-Frames leitet die Kommunikationseinrichtung des Flugzeugs FL entsprechend nur Datagramme mit der Identifikationsziffer PID 1 an das Endsystem, z.B. die Pilotenkonsole, des Flugzeugs FL weiter.

Fig.6 zeigt dazu im Zusammenhang mit dem Anwendungsbeispiel von Fig.5 die Frequenzbandbreite des Satelliten-Spotbeams SB für DVB-S2.

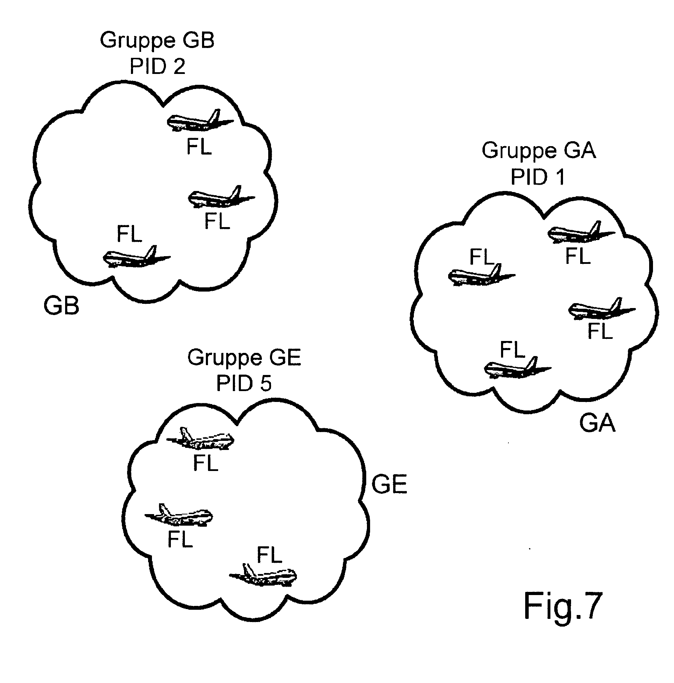

Fig.7 zeigt beispielhaft, wie Gruppen von Flugzeugen FL durch PIDs (Packet IDentifiers) zusammengefasst werden können, ohne dabei an Örtlichkeiten oder bestimmte Frequenzen gebunden zu sein. Im Beispiel sind drei Gruppen GA, GB und GE vorgesehen, wobei der Gruppe GA die Identifikationsziffer PID 1, der Gruppe GB die Identifikationsziffer PID 2 und der Gruppe GE die Identifikationsziffer PID 5 zugewiesen ist. Wechselt ein Flugzeug FL von z.B. Gruppe GA in Gruppe GE, so kann es während der Übertrittsphase Daten mit den Identifikationsziffern PID 1 und PID 5 empfangen. Ist die Übergangsphase beendet und das Flugzeug FL fest in Gruppe GE, wird nur noch auf die Identifikationsziffer PID 5 gefiltert. Jede Gruppe in Fig.7 verwendet den gleichen Frequenzbereich, ohne Unterteilung in Träger wie bei Frequenzmultiplex.

Nachfolgend wird das durch die Verwendung von Identifikationsziffern verbesserte Verfahren zur aeronautischen Funkkommunikation mit seinen Vorteilen noch einmal kurz zusammengefasst.

Der Satelliten-Spotbeam wird logisch in Sektoren bzw. Gruppen unterteilt, ohne notwendigerweise die Frequenzen aufzuteilen. Gruppen bzw. Sektoren lassen sich besonders vorteilhaft durch logische Identifikationsziffern bilden.

Die logischen Identifikationsziffern können auf verschiedenen Schichten des ISO/OSI-Protokollstacks gebildet werden:
- IP-Multicasting-Adressen;
- Link-Layer-Felder (z.B. PID bei MPEG-2-TS); und
- Physical-Layer-Felder (z.B. ISI bei DVB-S2).

Logische Identifikationsziffern können zur Denotation von Sektoren (an geographisch Grenzen gebunden) verwendet werden. Logische Identifikationsziffern können auch zur Denotation von Gruppen (nicht geographisch gebunden, sondern Gruppen im Sinne von Interessensgemeinschaften) eingesetzt werden.

In Flugzeugen vorgesehene Kommunikationseinrichtungen, z.B. die Pilotenkonsole, filtern auf die aktuelle Identifikationsziffer und geben die damit erhaltenen Daten im Cockpit akustisch oder visuell wieder.

Durch Zuweisen mehrerer Identifikationsziffern kann ein Flugzeug mehreren Gruppen/Sektoren angehören.

Alle sich im Satelliten-Spotbeam befindenden Flugzeuge empfangen die gesamte Kommunikation innerhalb eines Satelliten-Spotbeams und decodieren nur diejenige Information, die sie benötigen.

### Bezugszeichenliste

- A, B, C, , ..., Z: Sektoren, Gruppen
- CN: Controller-Node
- FL: Flugzeug
- GA, GB, GE: Gruppen von Flugzeugen
- ID 1, ID 2, ID 3, ..., ID X: Identifikationsziffern
- PID 1, PID 2, PID 5: Packet-IDentifiers,
Identifikationsziffern
- SA: Kommunikationssatellit
- SB: Satelliten-Spotbeam

## Patentansprüche

1. Verfahren zur aeronautischen Funkkommunikation zwischen in Flugzeugen (FL) vorgesehenen Kommunikationseinrichtungen und terrestrischen Kommunikationseinrichtungen im Wege über einen Kommunikationssatelliten (SA), der mit seinem zur Erde gerichteten Spotbeam (SB) ein bestimmtes geographisches Gebiet abdeckt, **dadurch gekennzeichnet, dass** der zur Erde gerichtete Spotbeam (SB) des Kommunikationssatelliten (SA) in mehrere geographisch verteilte, an geographische Grenzen gebundene und einzeln überwachbare Sektoren (A, B, C, ..., Z) oder in mehrere Gruppen unterteilt wird, in welche Flugzeuge (FL) entsprechend Interessengemeinschaften eingruppiert werden, wobei eine Interessengemeinschaft **dadurch** definiert ist, dass übertragene Informationen für alle Teilnehmer einer Gruppe relevant sind, dass die Unterteilung des Spotbeams in Sektoren bzw. Gruppen auf logischer Basis mittels einer jeweils einem Sektor bzw. einer Gruppe zugeordneten Identifikationsziffer (ID 1, ID 2, ID 3, ..., ID X) durchgeführt wird und dass alle Sektoren bzw. alle Gruppen die gemeinsamen Spotbeam-Ressourcen verwenden und sich die Höhe der von den einzelnen Sektoren bzw. Gruppen genutzten Kapazität nach dem tatsächlichen Flugverkehrsaufkommen in einem Sektor oder einer eine Interessengemeinschaft bildenden Gruppe richtet.

2. Verfahren nach Anspruch 1, **dadurch gekennzeichnet, dass** das Frequenzspektrum eines Satelliten-Spotbeams (SB) entsprechend einer Frequenzmultiplex-Methode in verschiedene Frequenzbänder aufgeteilt wird, wobei jedes Frequenzband einem Sektor (A, B, C, ..., Z) bzw. einer Gruppe entspricht.

3. Verfahren nach Anspruch 2, **dadurch gekennzeichnet, dass** die den einzelnen Sektoren (A, B, C, ..., Z) bzw. Gruppen zugeteilten Bandbreiten für jeden Sektor bzw. jede Gruppe entsprechend dem tatsächlichen Verkehrsaufkommen in dem jeweiligen Sektor bzw. in der jeweiligen Gruppe dimensioniert werden, wobei Sektoren (A, B, C, ..., Z) bzw. Gruppen mit hohem Flugverkehrsaufkommen Träger mit großer Bandbreite und Sektoren bzw. Gruppen mit niedrigerem Flugverkehrsaufkommen Träger mit geringer Bandbreite zugewiesen werden.

4. Verfahren nach Anspruch 1, **dadurch gekennzeichnet, dass** die Identifikationsziffer (ID 1, ID 2, ID 3, ..., ID X) auf der IP-Multicast-Ebene des ISO/OSI-Protokollstacks eingeführt wird, wobei die logische IP-Multicasting-Adresse der Identifikationsziffer und somit dem zugeordneten Sektor (A, B, C, ..., Z) bzw. der zugeordneten Gruppe entspricht.

5. Verfahren nach Anspruch 1, **dadurch gekennzeichnet, dass** die Identifikationsziffer (ID 1, ID 2, ID 3, ..., ID X) auf der Ebene der Link-Layer-Kennfelder des ISO/OSI-Protokollstacks eingeführt wird, wobei ein Feld im Link-Layer-Frame der Identifikationsziffer und somit dem zugeordneten Sektor bzw. der zugeordneten Gruppe entspricht.

6. Verfahren nach Anspruch 5, **dadurch gekennzeichnet, dass** für MPEG-2-Transport-Stream (TS) das PID(Packet IDentifier)-Feld das Link-Layer-Kennfeld ist.

7. Verfahren nach Anspruch 1, **dadurch gekennzeichnet, dass** die Identifikationsziffer (ID 1, ID 2, ID 3, ..., ID X) auf der Ebene der Kennfelder im Physical Layer des ISO/OSI-Protokollstacks eingeführt wird, wobei ein Feld im Physical-Layer-Frame der Identifikationsziffer und somit dem zugeordneten Sektor (A, B, C, ..., Z) bzw. der zugeordneten Gruppe entspricht.

8. Verfahren nach Anspruch 7, **dadurch gekennzeichnet, dass** für DVB-S2 das ISI(Input Stream Identifier)-Feld das Link-Layer-Kennfeld ist.

9. Verfahren nach einem der vorhergehenden Ansprüche, **dadurch gekennzeichnet, dass** die in Flugzeugen (FL) vorgesehenen Kommunikationseinrichtungen auf die aktuelle Identifikationsziffer (ID 1, ID 2, ID 3, ..., ID X) filtern und die unter dieser Identifikationsziffer anfallenden Daten akustisch oder visuell wiedergeben.

10. Verfahren nach einem der vorhergehenden Ansprüche, **dadurch gekennzeichnet, dass** einem Flugzeug (FL) zwei oder mehr Identifikationsziffern (ID 1, ID 2, ID 3, ..., ID X) zugewiesen werden, so dass dieses Flugzeug mehreren Sektoren (A, B, C, ..., Z) bzw. Gruppen angehört.

11. Verfahren nach Anspruch 10, **dadurch gekennzeichnet, dass** während der Übergangsphase eines Flugzeugs (FL) von einem Sektor (A, B, C, ..., Z) oder einer Gruppe in einen anderen Sektor bzw. in eine andere Gruppe die Informationen aus beiden Sektoren bzw. Gruppen von der betreffenden Flugzeug-Kommunikationseinrichtung erhalten werden, indem dem Flugzeug (FL) die Identifikationsziffern (ID 1, ID 2, ID 3, ..., ID X) der beiden betreffenden Sektoren bzw. Gruppen zugewiesen und dort im Cockpit zur Anzeige gebracht werden.

12. Verfahren nach einem der Ansprüche 1 bis 9, **dadurch gekennzeichnet, dass** alle sich in einem Satelliten-Spotbeam (SB) bewegenden Flugzeuge (FL) mit ihren Kommunikationseinrichtungen die gesamte Kommunikation in diesem Spotbeam empfangen und anhand der Identifikationsziffern (ID 1, ID 2, ID 3, ..., ID X) nur diejenige Information decodieren, die sie benötigen.

13. Verwendung des in einem der vorhergehenden Ansprüche angegebenen Verfahrens bei der Kommunikation zwischen Piloten von Flugzeugen (FL) und Flug-Controllern am Boden.
